# EUROPEAN PATENT SPECIFICATION

(11) **EP 0 518 399 B1**
(45) Date of publication and mention of the grant of the patent: **23.11.1994**
(21) Application number: 92201371.9
(22) Date of filing: 14.05.1992
(51) Int. Cl.: B65G 47/84

(54) **Conveyor**
Förderer
Convoyeur

(30) Priority: 16.05.1991 NL 9100847
(43) Date of publication of application: 16.12.1992
(73) Proprietor: VANDERLANDE INDUSTRIES NEDERLAND B.V., NL-5466 RB Veghel (NL)
(72) Inventor: Van den Goor, Jakobus Marie, NL-5641 WG Eindhoven (NL); Vertogen, Martinus Johannes Maria, NL-5411 GC Zeeland (NL)
(74) Representative: Vollebregt, Cornelis Jacobus, Ir.

(56) References cited:
- DE-A- 2 708 131
- FR-A- 852 176
- US-A- 3 361 247

## Description

The invention relates to a conveyor provided with a frame and with an endless drivable conveying means provided with parallel carriers extending transversely to the direction of movement of the conveying means, said carriers being pivotally coupled to at least one endless flexible coupling means, whilst at least some of said carriers support push-off members, said push-off members being connected to guide means disposed at the sides of the carriers remote from the push-off members, which guide means can co-operate with two intersecting guide rails mounted in predetermined places and extending in opposite directions, obliquely to the intended direction of movement of the carriers, whereby a reversible switch device is provided at the intersection point, said switch device being provided with a pair of switch tongues, which are pivotable between a position in which the one switch tongue extends at least partially into the one guide rail, whilst the other switch tongue is retracted from the other guide rail so as to pass the guide means through said other guide rail, and a second position, in which the other switch tongue extends at least partially into the other guide rail, whilst the one switch tongue is retracted from the one guide rail so as to pass the guide means through the one guide rail, said switch tongues being constructed in such a manner that a boundary side of a switch tongue, which, when seen in the intended direction of movement of a guide means through a guide rail, bounds the switch tongue at the upstream end of the part of the switch tongue possibly located in the guide rail in question, extends obliquely with respect to the longitudinal direction of said guide rail, from a point on the one side of the guide rail in question, which is directed away from the other guide rail, towards a point located further downstream on the other side of the guide rail in question.

Such a conveyor is described in the applicant's prior Application EP-A-444 734. Since the present invention relates to the construction of the switch device, the present application does not include a description of the construction of the actual conveyor; for a description of the construction of the conveyor reference may e.g. be had to the above Application EP-A 444 734, whose contents are incorporated herein by reference, although it will be apparent that the construction according to the invention may also be applied with similar conveyors having a construction different from that of said Application EP-A-444 734.

With this known construction the two switch tongues may each be arranged about their own pivot pin, which is arranged near the upstream end of the switch tongue in question, when seen in the intended direction of movement of the guide means. The two switch tongues are thereby mutually coupled by means of a rod system or the like.

This known construction is satisfactory per se, but the object of the invention is to obtain a conveyor of the above kind which can be built up of a smaller number of parts.

According to the invention this can be achieved in that the two switch tongues are mounted on a common support means, which is pivotable about a pivot pin arranged downstream of the intersection point of the guide rails, centrally therebetween, whilst a passage is provided between the downstream ends of the two switch tongues, which passage coincides with the one or the other guide rail, dependent upon the position of the switch tongues.

By using the construction according to the invention the switch tongues may be fixedly connected to each other and pivot about a single common axis, as a result of which a significant simplification of the construction of the switch device as compared with the above-mentioned prior proposal has been obtained, whilst furthermore significantly less noise is produced during operation.

The invention will be explained in more detail hereafter with reference to an embodiment of the construction according to the invention illustrated in the accompanying Figures.

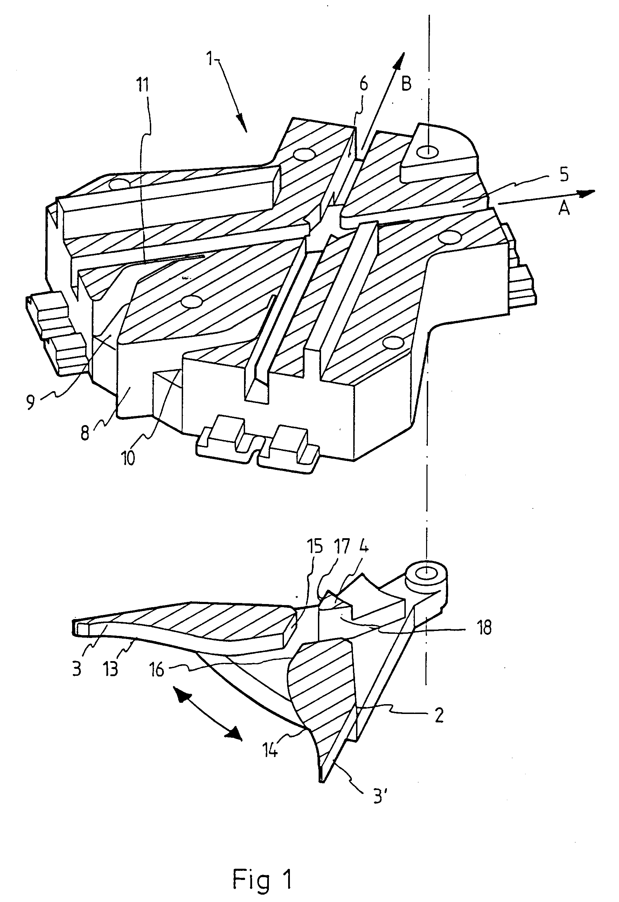

Figure 1 is a perspective view of two spaced-apart parts of the switch device according to the invention.

Figure 2 is a plan view of the switch device according to the invention.

Figure 3 is a front view of Figure 2.

Figure 4 is a cross section of Figure 2.

Figure 5 is a bottom view of Figure 1.

The switch device shown in the Figures comprises a one-piece switch block 1, preferably made of plastic material, which will be mounted in the frame of the conveyor near the intersection point of the guide rails intersecting one another, as described in the above-mentioned Patent Application EP-A-444 734, as well as a plate-shaped, at least substantially triangular support means 2 with two preferably one-piece switch tongues 3 and 3' mounted thereon and a guide cam 4 secured thereto.

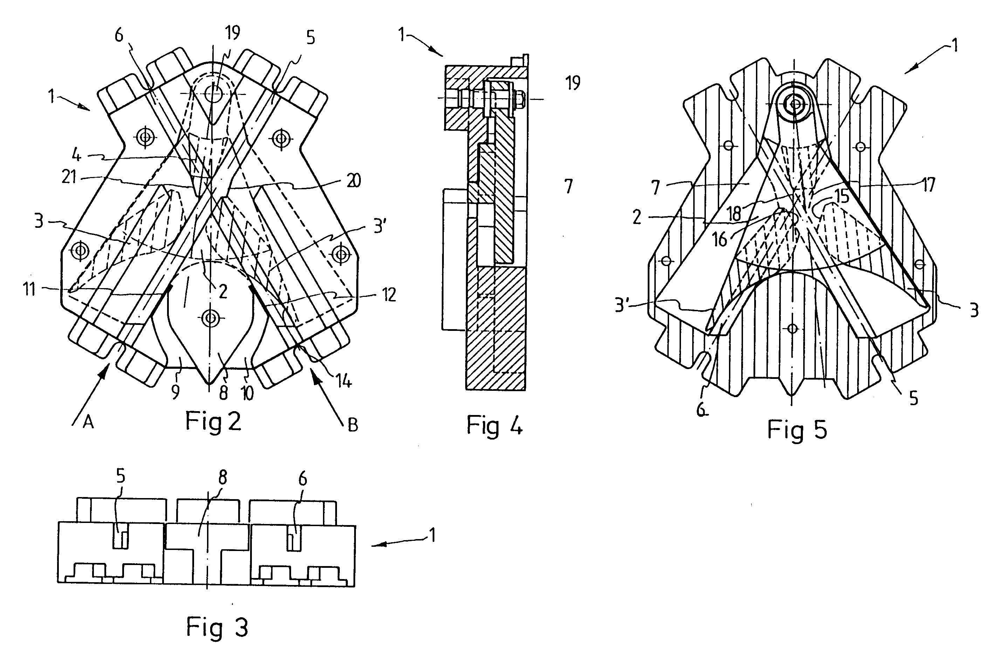

For easy reference the visible parts of the support means 2, of the switch tongues 3 and 3' mounted on said support means and of the guide cam 4 secured to said support means 2 are hatched in full lines in Figures 2 and 5, whereas the non-visible parts are hatched in broken lines.

As is illustrated in the Figures two intersecting grooves 5 and 6 are provided in the upper side of the switch block 1. Once the switch block has been mounted in the conveyor said grooves will form part of the guide rails near the intersection point of said guide rails, in fact they will constitute the intersecting parts of said guide rails. The switch block will thereby be mounted in such a manner that a guide means, as described in above-mentioned Patent Application. EP-A-444 734, will either move through the groove 5 in the direction according to the arrow A, or through the groove 6 in the direction according to the arrow B.

When seen from the intersection point of the two grooves 5 and 6 said grooves are also open at their bottom sides, on both sides of said intersection point, along part of their lengths and are thereby in communication with a recess 7 provided in the bottom side of the switch block.

When seen in the intended direction of movement of the guide means in the directions according to the arrows A and B respectively, upstreams of the intersection between the grooves 5 and 6 there is formed a more or less heart-shaped intermediate piece 8 by providing two further grooves 9 and 10 in the switch block, which extend from the front end of the switch block, in a direction remote from each other, in the direction of the grooves 5 and 6. The depth of the grooves 9 and 10 is at least substantially equal to that of those parts of the grooves 5 and 6 having a bottom. The ends of the grooves 9 and 10 located near the grooves 5 and 6 are separated from the grooves 5 and 6 by means of the partitions 11 and 12 respectively, which are integral with the remaining part of the switch block.

As furthermore appears from the Figures the ends of the switch tongues 3 and 3' project beyond the more or less triangular support plate in the upstream direction. The two facing boundary sides 13 and 14 of the two switch tongues have a curved configuration thereby, whilst the outer boundary sides of said switch tongues lie in one plane with the sides of the support plate 2. Furthermore the width of the two switch tongues gradually increases in downstream direction, when seen in the direction of movement of a guide means in the directions according to arrows A and B respectively.

The end of the guide cam 4 arranged downstream of the switch tongues 3 and 3', which end is located near the switch tongues 3 and 3', has a triangular configuration, such that the width of the guide cam 4 gradually increases in downstream direction. The switch tongues 3 and 3' are thereby arranged symmetrically with respect to the longitudinal centre plane through the guide cam 4.

The boundary faces 15 and 16 of the switch tongues 3 and 3', which are located near the guide cam 4 and which are directed towards said guide cam 4, are straight, just like the boundary faces 17 and 18 of the guide cam 4 located opposite said boundary faces 15 and 16, in such a manner that the boundary faces 15 and 17 and the boundary faces 16 and 18 define passages therebetween, said passages having the same width as the grooves 5 and 6 (Figure 5).

The support plate 2 is received in the recess 7, in such a manner that the ends of the switch tongues 3 and 4 projecting beyond the support plate 7 are located in the grooves 5 and 6 and/or parts of the recess 7 joining said grooves.

The support plate 2 is thereby pivotally connected to the switch block by means of a joint pin 19, which, as will be apparent in particular from Figures 2 - 5, is arranged downstream of the switch tongues 3 and 3', when seen in the intended direction of movement of a guide means according to the arrows A and B respectively.

As is furthermore apparent, in particular from Figure 2, recesses 20 and 21 are provided in the opposite boundary walls of the grooves 5 and 6 respectively, so as to receive the upstream end of the guide cam 4. The plate 2 with the switch tongues 3 and 3' mounted thereon can be pivoted from the one uttermost position, in which, as is illustrated in Figures 2 and 5, the upstream end of the guide cam 4 is located in the recess 21, into another uttermost position, in which the respective end of the guide cam 4 is located in the recess 20.

As is furthermore apparent from Figures 2 and 5 the switch tongue 3 is entirely retracted from the groove 5 in the illustrated position of the support means 2, and located in a part of the recess 7 which joins the groove 5 and which is located beside said groove. The position of the tongue 3' on the other hand is such that part of the switch tongue 3' is located in the groove 6 and that remaining parts of the switch tongue 3' are located on both sides of the groove 6, in parts of the recess 7 joining said groove 6. As will be apparent in particular from Figure 2, a guide means (not shown) connected to a push-off member can thereby move unimpededly through the groove 5 in the direction according to the arrow A, whereby the cam 4 and the switch tongue 3' are located on either side of said groove 5 and block the entrance from the groove 5 to the groove 6, the opposed boundary faces 18 and 16 of the cam 4 and the switch tongue 3' respectively forming part of the side walls of the groove 5.

When a guide means connected to a push-off member starts to move through the groove 6 in the direction according to the arrow B, said guide means will come into contact with the upstream boundary face 14 of the switch tongue 3', when seen in the direction of movement of the guide means, said boundary face extending into the groove from a point located near the boundary face of the groove 6 located furthest to the right, when seen in Figure 2, said boundary face being located at the side of the groove 6 remote from the groove 5, towards a point located further downstream on the other boundary side of the groove 6, on the boundary side of the groove 6 located closest to the groove 5, therefore. Due to this configuration of the boundary face 14 of the switch tongue 3' coming into contact with the arriving guide means said switch tongue 3' will be pivoted in an anti-clockwise direction, when seen in Figure 2, about the pivot axis formed by the pin 19, by the guide means coming into contact therewith and moving in the direction according to the arrow B. As a result of this pivoting motion of the switch tongue 3' also the support means 2 with the switch tongue 3 and the cam 4 will be pivoted about the pivot pin 19, whereby the upstream end of the cam 4 will come to lie in the recess 20. Then the two opposite boundary faces 15 and 17 of the switch tongue 3 and the cam 4 respectively will form part of the upright boundary walls of the groove 6, and the guide means, which has effected the pivoting of the support means 2 with the parts mounted thereon from the position shown in Figure 2, can thus move unimpededly through the groove 6. In this pivoted position part of the switch tongue 3 will be located in the groove 5, in a similar manner as shown in Figure 2 with respect to the switch tongue 3' in the groove 6. It will be apparent that then a guide means which may be moving through the groove 5 in the direction according to the arrow A will pivot the support 2 with the parts mounted thereon back into the position shown in Figures 2 and 5.

Due to faulty fitting during assembly of the machine or after possible repair work a situation may occur where the push-off members with the guide means connected threto are not placed correctly and as a result fail to move through the guide rails of the conveyor in the desired manner. In that case such incorrectly disposed guide means will be guided along the heart-shaped guide piece 8 in the groove 9 or 10, in the direction of the partition 11 or 12. In that case such a thin partition 11 or 12 will be broken open by the guide means in question, so that the guide means will land in the groove 5 or 6 upstream of the switch tongue 3 or 3' anyway, and be guided along in the desired manner again. The fact that the partition 11 or 12 has been broken through does not interfere with the correct operation of the switch device, so that in such a case it is not strictly necessary to renew the switch block 1.

## Claims

1. A conveyor provided with a frame and with an endless drivable conveying means provided with parallel carriers extending transversely to the direction of movement of the conveying means, said carriers being pivotally coupled to at least one endless flexible coupling means, whilst at least some of said carriers support push-off members, said push-off members being connected to guide means disposed at the sides of the carriers remote from the push-off members, which guide means can co-operate with two intersecting guide rails mounted in predetermined places and extending in opposite directions, at an acute angle to the intended direction of movement of the carriers, a reversible switch device (1) being provided at the intersection point, said switch device comprising a pair of switch tongues (3,3'), which are pivotable between a position in which the one switch tongue extends at least partially into the one guide rail, whilst the other switch tongue is retracted from the other guide rail so as to pass the guide means through said other guide rail, and a second position, in which the other switch tongue extends at least partially into the other guide rail, whilst the one switch tongue is retracted from the one guide rail so as to pass the guide means through the one guide rail, said switch tongues being constructed in such a manner that a boundary side of a switch tongue, which, when seen in the intended direction of movement of a guide means through a guide rail, bounds the switch tongue at the upstream end of the part of the switch tongue possibly located in the guide rail in question, extends obliquely with respect to the longitudinal direction of said guide rail, from a point on the one side of the guide rail in question, which is directed away from the other guide rail, towards a point located further downstream on the other side of the guide rail in question, characterized in that the two switch tongues (3,3') are mounted on a common support means (2), which is pivotable about a pivot pin (19) arranged downstream of the intersection point of the guide rails, centrally therebetween, whilst a passage (17-19) is provided between the downstream ends of the two switch tongues, which passage coincides with the one or the other guide rail, dependent upon the position of the switch tongues.

2. A conveyor according to claim 1, characterized in that the downstream ends of the switch tongues are arranged symmetrically with respect to a guide cam secured to the support means, the upstream end of the guide cam having an at least substantially triangular configuration and the boundary faces of said triangular part of the cam extending parallel to boundary faces of the nearby ends of the switch tongues, all this in such a manner that in two uttermost positions of the support means a boundary face of the triangular end of the cam and an opposite boundary face of a switch tongue form part of upright boundary faces of a guide rail, through which a guide means can move.

3. A conveyor according to claim 2, characterized in that near the intersection of the guide rails recesses are provided in opposite walls of the two rails, so as to receive upstream ends of the guide cam.

4. A conveyor according to any one of the preceding claims, characterized in that the switch device has a switch block, the intersecting parts of the guide rails being provided in the upper side of said switch block, whilst a recess is provided in the bottom side of the switch block, said recess being in communication with grooves forming guide rails which are provided in the block, the support means with the switch tongues being accommodated in said recess.

5. A conveyor according to claim 4, characterized in that further grooves are provided between the upstream ends of said grooves forming parts of the guide rails, said further grooves extending away from each other in downstream direction from a point located at the upstream end of the switch block, centrally between grooves forming part of the guide rails, in the direction of the grooves forming part of the guide rails, and that the ends of the further grooves of the guide rails located near said guide rails are separated by partitions that can be broken through.

## Patentansprüche

1. Förderer mit einem Rahmen und einer endlosen antreibbaren Fördereinrichtung, die mit parallelen Trägern versehen ist, welche sich quer zur Bewegungsrichtung der Fördereinrichtung erstrecken und schwenkbar mit mindestens einer endlosen flexiblen Kupplungseinrichtung gekoppelt sind, wobei mindestens einige der Träger Wegdrückelemente lagern, die mit Führungseinrichtungen verbunden sind, welche an den Seiten der Träger von den Wegdrückelementen entfernt angeordnet sind und mit zwei sich schneidenden Führungsschienen zusammenwirken können, die an vorgegebenen Stellen montiert sind und sich in entgegengesetzte Richtungen unter einem spitzen Winkel zur beabsichtigten Bewegungsrichtung der Träger erstrecken, wobei eine reversible Schalteinrichtung (1) am Schnittpunkt vorgesehen ist, die ein Paar von Schaltzungen (3, 3') umfaßt, welche zwischen einer Position, in der sich die eine Schaltzunge zumindest teilweise in die eine Führungsschiene erstreckt, während die andere Schaltzunge von der anderen Führungsschiene zurückgezogen ist, um die Führungseinrichtungen durch die andere Führungsschiene zu leiten, und einer zweiten Position, in der sich die andere Schaltzunge zumindest teilweise in die andere Führungsschiene erstreckt, während die eine Schaltzunge von der einen Führungsschiene zurückgezogen ist, um die Führungseinrichtungen durch die eine Führungsschiene zu leiten, verschwenkbar und so konstruiert sind, daß eine Grenzseite einer Schaltzunge, die in der beabsichtigten Bewegungsrichtung einer Führungseinrichtung durch eine Führungsschiene die Schaltzunge am aufstromseitigen Ende des möglicherweise in der in Rede stehenden Führungsschiene angeordneten Teiles der Schaltzunge begrenzt, sich in bezug auf die Längsrichtung der Führungsschiene von einem Punkt auf der einem Seite der in Rede stehende Führungsschiene, der von der anderen Führungsschiene weggerichtet ist, schiefwinklig bis zu einem Punkt erstreckt, der weiter abstromseitig auf der anderen Seite der in Rede stehenden Führungsschiene angeordnet ist, dadurch gekennzeichnet, daß die beiden Schaltzungen (3, 3') an einer gemeinsamen Lagereinrichtung (2) montiert sind, die um einen Drehzapfen (19), welcher abstromseitig des Schnittpunktes der Führungsschiene mittig dazwischen angeordnet ist, drehbar ist und daß ein Kanal (17-19) zwischen den abstromseitigen Enden der beiden Schaltzungen vorgesehen ist, der in Abhängigkeit von der Position der Schaltzungen mit der einen oder der anderen Führungsschiene zusammenfällt.

2. Förderer nach Anspruch 1, dadurch gekennzeichnet, daß die abstromseitigen Enden der Schaltzungen symmetrisch in bezug auf einen an der Lagereinrichtung befestigten Führungsnocken angeordnet sind, wobei das aufstromseitige Ende des Führungsnocken eine mindestens im wesentlichen dreieckförmige Gestalt besitzt und sich die Grenzflächen des dreieckförmigen Teiles dem Nocken parallel zu Grenzflächen der nahegelegenen Enden der Schaltzungen erstrecken, so daß in den beiden äußersten Positionen der Lagereinrichtung eine Grenzfläche des dreieckförmigen Endes des Nockens und eine gegenüberliegende Grenzfläche einer Schaltzunge einen Teil von aufrecht stehenden Grenzflächen einer Führungsschiene bilden, durch die sich eine Führungseinrichtung bewegen kann.

3. Förderer nach Anspruch 2, dadurch gekennzeichnet, daß in der Nähe des Schnittpunktes der Führungsschienen in gegenüberliegenden Wänden der beiden Schienen Ausnehmungen vorgesehen sind, um die aufstromseitigen Enden des Führungsnockens aufzunehmen.

4. Förderer nach einem der vorangehenden Ansprüche, dadurch gekennzeichnet, daß die Schaltvorrichtung einen Schaltblock aufweist und daß die sich schneidenden Teile der Führungsschienen in der oberen Seite des Schaltblocks vorgesehen sind, während eine Ausnehmung in der Unterseite des Schaltblocks angeordnet ist, die mit Nuten in Verbindung steht, welche im Block vorgesehene Führungsschienen bilden, wobei die Lagereinrichtung mit den Schaltzungen in der Ausnehmung aufgenommen ist.

5. Förderer nach Anspruch 4, dadurch gekennzeichnet, daß weitere Nuten zwischen den aufstromseitigen Enden der die Teile der Führungsschienen bildenden Nuten vorgesehen sind, die sich in abstromseitiger Richtung von einem Punkt, der am aufstromseitigen Ende des Schaltblocks angeordnet ist, mittig zwischen den Nuten, die einen Teil der Führungsschienen bilden, in Richtung der einen Teil der Führungsschienen bildenden Nuten voneinander weg erstrecken, und daß die Enden der weiteren Nuten der Führungsschienen, die in der Nähe der Führungsschienen angeordnet sind, durch Trennwände abgetrennt sind, die durchbrochen werden können.

## Revendications

1. Convoyeur comprenant un châssis et des moyens de transport sans fin entraînables pourvus de supports parallèles s'étendant transversalement à la direction de mouvement des moyens de transport, lesdits supports étant reliés de façon pivotante à au moins un élément de couplage flexible sans fin, tandis qu'au moins certains desdits supports portent des poussoirs, lesdits poussoirs étant reliés à des moyens de guidage disposés sur les côtés des supports éloignés des poussoirs, lesdits moyens de guidage pouvant coopérer avec deux rails de guidage en intersection montés à des endroits prédéterminés et s'étendant dans des directions opposées, suivant un angle aigu par rapport à la direction prévue de mouvement des supports, un aiguillage réversible (1) étant prévu au point d'intersection, ledit aiguillage comprenant deux aiguilles de commutation (3,3') qui peuvent pivoter entre une position dans laquelle la première aiguille pénètre au moins partiellement dans le premier rail de guidage, tandis que l'autre aiguille est rétractée de l'autre rail de guidage afin de laisser passer les moyens de guidage dans ledit autre rail de guidage, et une deuxième position dans laquelle l'autre aiguille pénètre au moins partiellement dans l'autre rail de guidage tandis que la première aiguille est rétractée du premier rail de guidage afin de laisser passer les moyens de guidage dans le premier rail de guidage, lesdites aiguilles de commutation étant construites d'une manière telle qu'un bord d'une aiguille,qui, lorsqu'il est vu dans la direction prévue de mouvement des moyens de guidage dans un rail de guidage, délimite l'aiguille à l'extrémité amont de la partie de l'aiguille qui peut se trouver dans le rail de guidage considéré, s'étend obliquement par rapport à la direction longitudinale dudit rail de guidage, à partir d'un point situé sur le premier côté du rail de guidage considéré, qui est à l'opposé de l'autre rail de guidage, vers un point situé plus loin en aval de l'autre côté du rail de guidage considéré, caractérisé en ce que les deux aiguilles de commutation (3,3') sont montées sur un socle commun (2) qui peut pivoter autour d'un axe de pivot (19) prévu en aval du point d'intersection des rails de guidage, centralement entre ces derniers, tandis qu'un passage (17-19) est prévu entre les extrémités aval des deux aiguilles, ce passage coïncidant avec l'un ou l'autre des rails de guidage, selon la position des aiguilles de conmutation.

2. Convoyeur suivant la revendication 1, caractérisé en ce que les extrémités aval des aiguilles de commutation sont disposées symétriquement par rapport à une came de guidage fixée au socle , l'extrémité amont de la came de guidage ayant une configuration au moins sensiblement triangulaire et les faces de délimitation de ladite partie triangulaire de la came s'étendant parallèlement aux faces de délimitation des extrémités voisines des aiguilles, tout ceci d'une manière telle que, dans deux positions extrêmes du socle une face de délimitation de l'extrémité triangulaire de la came et une face opposée de délimitation d'une aiguille forment une partie des faces de délimitation verticales d'un rail de guidage dans lequel un moyen de guidage peut se déplacer.

3. Convoyeur suivant la revendication 2, caractérisé en ce que, près de l'intersection des rails de guidage, des évidements sont ménagés dans les parois opposées des deux rails, afin de recevoir les extrémités amont de la came de guidage.

4. Convoyeur suivant une quelconque des revendications précédentes, caractérisé en ce que l'aiguillage comprend un bloc de commutation, les parties en intersection des rails de guidage étant prévues dans la face supérieure dudit bloc, tandis qu'un évidement est prévu dans la face inférieure dudit bloc, ledit évidement étant en communication avec des rainures formant les rails de guidage qui sont ménagées dans le bloc, le socle avec les aiguilles étant logé dans ledit évidement.

5. Convoyeur suivant la revendication 4, caractérisé en ce que d'autres rainures sont prévues entre les extrémités amont desdites rainures formant des parties des rails de guidage, lesdites autres rainures s'étendant à l'opposé l'une de l'autre vers l'aval à partir d'un point situé à l'extrémité amont du bloc de commutation, centralement entre les rainures formant une partie des rails de guidage, dans la direction des rainures formant une partie des rails de guidage, et en ce que les extrémités desdites autres rainures des rails de guidage situées près desdits rails de guidage sont séparées par des cloisons qui peuvent être cassées.
